# EUROPÄISCHE PATENTSCHRIFT

(11) **EP 1 124 625 B1**
(45) Veröffentlichungstag und Bekanntmachung des Hinweises auf die Patenterteilung: **21.06.2006**
(21) Anmeldenummer: 99948789.5
(22) Anmeldetag: 18.09.1999
(51) Int. Cl.: B01D 71/52, C08J 5/22, H01M 8/02, B01D 61/42, B01D 61/44, C08L 71/12, B01J 39/18

(54) **MEMBRANEN, ENTHALTEND SULFONIERTES POLYETHERKETON UND WEITERES POLYMER, VERFAHREN ZU DEREN HERSTELLUNG UND DEREN VERWENDUNG**
MEMBRANES CONTAINING SULPHONATED POLYETHERKETONE AND ANOTHER POLYMER, METHOD FOR THE PRODUCTION AND USE THEREOF
MEMBRANES CONTENANT DU POLYETHERCETONE SULFONE ET UN AUTRE POLYMERE, LEUR PROCEDE DE PRODUCTION ET LEUR UTILISATION

(30) Priorität: 16.10.1998 DE 19847782
(43) Veröffentlichungstag der Anmeldung: 22.08.2001
(73) Patentinhaber: Pemeas GmbH, 65926 Frankfurt am Main (DE)
(72) Erfinder: SOCZKA-GUTH, Thomas, D-65719 Hofheim (DE); PADBERG, Christoph, D-65195 Wiesbaden (DE); FRANK, Georg, D-72074 Tübingen (DE)
(74) Vertreter: Luderschmidt, Schüler & Partner GbR
(86) Internationale Anmeldenummer: PCT/EP1999/006929
(87) Internationale Veröffentlichungsnummer: WO 2000/023177

(56) Entgegenhaltungen:
- EP-A- 0 337 626
- EP-A- 0 574 791
- EP-A- 0 604 882
- EP-A- 0 681 339
- EP-A- 0 688 824
- WO-A-96/29360
- JOURNAL OF POLYMER SCIENCE: POLYMER CHEMISTRY EDITION, Bd. 23, 1985, Seiten 2205-2223, XP000601636 in der Anmeldung erwähnt

## Beschreibung

Brennstoffzellen sind elektrochemische Energieumwandler, die sich besonders durch ihren hohen Wirkungsgrad auszeichnen. Polymerelektrolyt-Brennstoffzellen (PEM) zeichnen sich unter den verschiedenen Arten von Brennstoffzellen durch ihre hohe Leistungsdichte und ihr geringes Leistungsgewicht aus.

Einer der Gründe, die im Moment noch gegen eine Kommerzialisierung der Brennstoffzellentechnologie sprechen, ist die enormen Kosten der derzeitigen gängigen Membran-Materialien wie Nafion®.

Protonenleitende Membranen auf Basis von sulfonierten Polyetherketonen für den Einsatz in Brennstoffzellen sind bekannt und werden auch in der Literatur beschrieben. So beschreibt die Deutsche Patentanmeldung 197 54 305.7 die Verwendung von sulfoniertem PEEK (PEEK= PolyEtherEtherKeton) (Victrex PEEK®) mit einem lonenaustauscherequivalent (IEC) von 1.35 bis 1.95 mmol (-SO₃H)/g Polymer in Brennstoffzellen Die Verwendung von sulfonierten PEEKK (Hostatec) wird in WO96/29359 und WO96/29360 beschrieben. Überwiegend aus der Wiederholungseinheit -O-Ar-CO-Ar- bestehende Polyetherketone werden in EP-A- 0 152 161 offenbart; sulfonierte, streng alternierende Polyetherketone mit der Wiederholungseinheit -O-Ar-CO-Ar- in J. Polym. Sci.: Vol. 23, 2205-2223, 1985. Der Aufbau der Polyetherketone geschieht hier durch elektrophilen, und nicht wie in EP 0152161 beschrieben durch nucleophilen Angriff.

Üblicherweise werden die Polymere mit Hilfe von Sulfurtrioxid unter Verwendung von Triethylphosphat in Dichlorethan sulfoniert. Eine weitere, in der Literatur verwendete Sulfonierungsmethode ist die Chlorsulfonierung mit Chlorsulfonsäure. Allerdings wird bei dieser Methode, abhängig vom Grad der Sulfonierung, auch ein Abbau des Molekulargewichtes beobachtet. Es schließt sich die Amidierung des Säurechlorides an. Der Einsatz in Brennstoffzellen oder Eigenschaftsprofile, die den Einsatz in Brennstoffzellen nahelegen könnten werden nicht erwähnt.

Ein noch wenig untersuchtes Polyetherketon ist das erwähnte, streng altemierende Polymer mit der Summenformel -O-Ar-CO-Ar-, welches unter anderem von der Fa. Victrex Plc, Großbritannien, hergestellt wird. Die Sulfonierung des Polymeren kann z. B. durch Zugabe von Oleum zur schwefelsauren Lösung des Polymeren erreicht werden. Die Eignung solcher aromatischer, nicht fluorierter Polymere für den Einsatz in Brennstoffzellen wird in der bekannten Literatur allerdings auf Grund ungenügender Stabilität der Polymermembranen unter den extremen Bedingungen, die in Brennstoffzellen herrschen, bestritten (A. Steck, Proc. 1^{st} Inter. Symp. On New Materials For Fuel Cell Systems, Montreal 1995, pp 74).

Die Glastemperatur von PEK (141 °C, siehe EP 0 152 161 B1) unterscheidet sich im Vergleich zu PEEK (143 °C), Kristallinität 30 % nur unwesentlich.

Während Membranen aus sulfonierten PEEK mit einem IEC ab 1.5 meq (-SO₃H)/g (Polymer) (auf Basis von Victrex 450 PF) in kochendem Wasser nur für etwa 2-3 h stabil sind, sind hingegen sulfonierte Polyetherketone, auf Basis von Victrex PEK mit einem vergleichbarem IEC, in kochendem Wasser für mehr als 50 h stabil. Zumal erscheint die durch das Fehlen von -O-Ar-O- Einheiten elektronenarme Struktur des Polyetherketon-Polymerrückrates besonders geeignet für Brennstoffzellenanwendungen zu sein.

Membranen aus hochsulfonierten Polymeren sind besonders für Brennstoffzellen mit niedriger oder keiner Befeuchtung, aber auch für sogenannte Super-Caps, also Kondensatoren mit extrem hoher Kapazität von Interesse.

Es ist bekannt, daß sich die Eigenschaften von polymeren Materialien durch die Beimischung von weiteren Komponenten verändern lassen. Die Schwierigkeit besteht darin, daß sich das Eigenschaftprofil von Blends nur schwer vorhersehen läßt. Es gibt es keineTheorie, die die komplexe Natur von Polymer-Polymer-Wechselwirkungen widerspiegelt (Macomolecules, Vol. 16, 1983, p 753).

So werden z.B. in EP-A-0688 824 Membranen aus homogenen Polymerlegierungen auf Basis von Polyetherketonen, Polyethersulfonen und einem dritten, hydrophilen Polymer erwähnt.
Die Zugabe des dritten hydrophilen Polymers ist dabei notwendig, um ausreichende Befeuchtungseigenschaften der Polymere zu erzielen.

Die Aufgabe der vorliegenden Erfindung ist es leistungsfähige Membranen mit hoher Protonenleitfähigkeit aus kostengünstigen Materialien zur Verfügung zu stellen, die ferner eine hohe chemische und mechanische Stabilität besitzen und sich somit insbesondere für den Einsatz in Brennstoffzellen eignen. Dabei sollte die Leistungsfähigkeit des Materials in der Brennstoffzelle den bisherigen fluorierten Standard-Materialien wie Nafion überlegen soin.

Die vorliegende Erfindung löst diese Aufgabe und betrifft Membranen enthaltend 30-99, vorzugsweise 55 bis 99 Gew.%, eines sulfonierten, streng alternierenden Polyetherketons (A) mit Wiederholungseinheiten der Formel (I)
-Ar-O-Ar'-CO-, wobei Ar und Ar' unabhängig voneinander zweiwertige aromatische Rest sind,
Ar vorzugsweise ein Phenylenrest mit para- und/oder meta-Bindungen ist und Ar' vorzugsweise ein Phenylen-, Naphthylen-, Biphenylen-, Anthrylenrest ist, mit einer Ionenaustauscherkapazität von 1.3 bis 4.0 meq (-SO₃H)/g (Polymer) und 0,5-70 Gew. %, insbesondere 1,0 bis 50 Gew.%, eines partiell, nicht oder perfluorierten Polyethersulfons, Polyimids oder eines Derivats dieser Polymere (B), das vorzugsweise in organischen Lösungsmitteln löslich ist.

Die Ionenaustauscherkapazität (nachstehend "IEC" genannt) wird durch Elementaranalyse der gewaschenen und getrockneten Polymeren durch Bestimmung des Verhältnisses von Kohlenstoff zu Schwefel (C/S Quotient) ermittelt.

Lösliche Polymere im Sinne dieser Beschreibung sind Polymere, die bei 25°C zu mindestens 0,1 g pro Liter in organischen Lösungsmitteln löslich sind.

Überraschend ist vor allem, daß sich hohe Anteile des zweiten Polymeren (B), wie z.B. eines Polyethersulfons der Formel -Ar-O-Ar'-SO₂- oder eines Polyimids oder eines Derivates dieser Polymere, mit den sulfonierten Polyetherketonen mischen lassen, ohne, daß die Leitfähigkeit zusammenbricht. Bisherige Untersuchungen an sulfonierten PEEK mit einem IEC von 1.62 meq (-SO₃H)/g (Polymer) hatten nämlich ergeben, daß die Leitfähigkeit bereits bei Zugaben von nur wenigen Prozent eines Polyethersulfons, wie z.B. Ultrason drastisch absank.

Die erfindungsgemäß eingesetzten Polymere enthalten vorzugsweise aromatische Reste, die gegebenenfalls Substituenten tragen, wie Alkyl, Cycloalkyl, Aryl oder Halogen.

Bereits die Zugabe von 5 % eines Polyethersulfons (PES) führt zu einem Absinken der Leitfähigkeit von 80 auf etwa 70 mS/cm. Die erfindungsgemäßen Membranen aus sulfonierten Polyetherketonen und Polyethersulfonen behalten hingegen ihre Leitfähigkeit bis zu einer Zugabe von 40 % PES praktisch bei oder steigen sogar leicht an. Die gefundenen Leitfähigkeitwerte der Blends liegen deutlich über den bei den sulfonierten PEEK gefundenen.
Dies bedeutet einen erheblichen kommerziellen Vorteil, da preiswertes Polyethersulfon ohne den Verlust an Protonenleitfähigkeit in größeren Mengen beigemischt werden kann. Daneben wird das E-Modul in Wasser bei 60 °C deutlich verbessert (s. Beispiele), was sich positiv auf die Festigkeit bei der Einwirkung von Differenzdruck und an den Rändern der Membran, an denen die befeuchteten Gase ungehindert und ohne mechanische Unterstützung durch die Elektrode an die Membran dringen können, auswirkt. So nimmt das E-Modul bei 60 °C in Wasser bis auf 540 MPa im Vergleich zu 7 MPa beim reinen Material bei immer noch sehr guten Leitfähigkeitswerten zu.
Auch die Leistung in der Brennstoffzelle ist bei diesen Membranmaterialien gut, wie in den Beispielen gezeigt wird.

Das E-Modul im trocknen Zustand liegt bei den erfindungsgemäßen Membranen bei 23 °C und 50% relativer Feuchte bei ≥ 600 MPa, insbesondere im Bereich von 600 bis 3000 MPa, bei einer Reißdehnung im Bereich von 5 bis 300%, vorzugsweise 30 bis 200%. Die E-Modul-Werte liegen hierbei zwar im Vergleich mit den herkömmlichen Polyetherketonen, wie z.B. Victrex® und Hostatec® , niedriger, dafür wird aber eine wesentlich verbesserte Reißdehnung erreicht, die ausschlaggebend für eine gute Stabilität und die Verwendung der Membranen in Brennstoffzellen ist. Die erfindungsgemäßen Membranen zeichnen sich dadurch aus, daß sie bei einem E-Modul (bestimmt als die Steigung der Tangente bei 1,2 MPa) in Wasser bei 60 °C von mindestens 90 MPa, insbesondere 100 bis 700 MPa, eine Reißdehnung von ≥ 200 %, insbesondere 200 bis 800 %, aufweisen.

Die erfindungsgemäßen Membranen eignen sich daher ausgezeichnet für den Einsatz in Brennstoffzellen, insbesondere für Direkt-Methanol-Brennstoffzellen, oder auch Hochleistungskondensatoren sowie für den Einsatz in der Elektrodialyse, wobei die Membran im letztgenannten Fall vorzugsweise eine Dicke von wenigstens 30 µm hat.
Für den Einsatz der erfindungsgemäßen Membranen in Brennstoffzellen ist ein Gehalt von 5 bis 25 Gew. % des Polymers (B), bei einer Verwendung in Direkt-Methanol-Brennstoffzellen ein Gehalt von 5 bis 50 Gew. % bevorzugt.

So werden bei der Verwendung der erfindungsgemäßen Membran in Brennstoffzellen im Wasserstoff-Luft-Betrieb und einem Gasüberdruck von 2,0 bar sowie einem Wasserstoff Durchfluß von 7,1 l/h und einem Sauerstoffdurchfluß von 30,1 l/h, mit Elektroden nach WO 97/20358 und einer Platinbelegung von 0,35 mg/cm² pro Seite, Stromdichten bei 700 mV von mindestens 450 mA/cm² erreicht.

Zur Herstellung der vorliegenden Membranen wird das sulfonierte Polyetherketon (A) mit dem Polymer (B) in einem Gewichtsverhältnis im Bereich von 0,01 bis 0,5 (B/A) in einem Lösungsmittel, wie z.B. N-Methylpyrrolidon (NMP) oder Dimethylformamid (DMF), Dimethylacetamid (DMAc), Dimethylsulfoxid (DMSO) oder Lösungsmittelgemischen enthaltend Wasser und 1,4-Dioxan und Acetonitril, in Lösung gebracht. Die Temperatur sollte vorzugsweise 90 °C nicht überschreiten. Anschließend wird die Lösung bei einer Temperatur im Bereich von 20 bis < 90 °C über einem PP (Polypropylen)-Tiefenfilter filtriert und anschließend getrocknet und entgast.

Die Lösung wird mit Hilfe einer Edelstahlrakel auf einem flächigen Träger, beispielsweise einer Glasplatte verstrichen und bei 25 bis 140 °C in einer Umluftwärmekammer über Nacht getrocknet. Vorzugsweise wird die Membran so getrocknet, daß der Restgehalt an Lösungsmittel kleiner 0,5 Gew. % ist.

Es empfiehlt sich die Membran nach der Herstellung durch Waschen in Wasser oder einer verdünnten Säure (Salpetersäure, Schwefelsäure, Phosphorsäure) mit einer Konzentration von 0,1-20 % von restlichem Lösungsmittel und weiteren wasserlöslichen Verunreinigungen zu befreien.

In einer besonderen Ausführungsform der Erfindung kann die Lösung des Blends in ein saugfähiges Vlies eingebracht werden. Die Leitfähigkeit des so hergestellten Verbundes für Protonen ist in diesem Fall in Kontakt mit Wasser bei Raumtemperatur größer 50 mS/cm.

### Beispiele:

### Beispiel 1: Sulfonierung von PEK

3,49 kg 98%ige Schwefelsäure werden in einem beheizbaren Doppelmantelreaktiongefäß vorgelegt. Unter Rühren mit einer Zahnscheibe werden möglich schnell 400 g Victrex PEK in die Lösung eingetragen. Die Temperatur wir auf 50 °C erhöht. Sobald eine klare, rote Lösung erhalten worden ist werden 2,40 kg Oleum (20 % freies SO₃) zugegeben. Sobald der gewünschte Sulfonierungsgrad (bei einem IEC von 2.12 meq (-SO₃H)/g (Polymer) etwa nach 1-2 Stunden) erreicht ist wird die Lösung auf 20 °C abgekühlt und das Polymer in destilliertem Wasser ausgefällt.

Das Polymer wird abgesaugt, neutral gewaschen (Test mit BaCl₂-Lösung) und bei 60-120 °C im Umlufttrockenschrank getrocknet.

### Beispiel 2: Herstellung der Blends am Beispiel der unter Beispiel 3 eingesetzten Membran

Die Lösungen werden in einem heizbaren Doppelmanteigefäß unter Stickstoffüberströmung angesetzt. Hierzu werden in 332 g trocknes NMP 8.5 g trocknes Polyethersulfon Ultrason® 7020 P und 52.7 g trocknes, sulfoniertes Polyetherketon PEK mit einem IEC von 2.12 meq
(-SO₃H)/g (Polymer) eingebracht und mit einem Dissolver in Lösung gebracht. Die Temperatur der Lösung soll dabei 90 °C nicht übersteigen. Die Lösung wird bei 80 °C über einen PP-Tiefenfilter (5 µm) filtriert und für 10 min. im Vakuumtrockenschrank bei 50 °C, 100 mbar entgast.

Die Lösung wird mit Hilfe einer Edelstahlrakel (200 µm) auf einer Glasplatte verstrichen und bei 30 bis 120 °C in einer Umluftwärmekammer über Nacht getrocknet.

### ßeispiel 3: Leistungsdaten

Leistung eines Blends aus PEK mit einem IEC von 2.12 meq (-SO₃H)/g (Polymer) und 12.5 Gew. % PES Ultrason. Dicke 40 µm. Elektrode nach WO 97/20358 mit einer Platinbelegung von 0.35 mg/cm² pro Seite.

| | | | | | |
|---|---|---|---|---|---|
| Zellentemperatur [°C]: | RT | | | Max Leistung [mW/cm²]: | 500 |
| Gastemp. H2/Luft [°C]: | 89/95 | | | U bei max. P [mV] | 617 |
| Befeuchtung: | H₂ / Luft | | | I bei 700 mV [mA/cm²]: | 605 |
| | H₂ | Luft | | I bei 600 mV [mA/cm²]: | 736 |
| Überdruck [bar_{ü}]: | 2,0 | 2,0 | | Fläche [cm²]: | 12,6 |
| Durchfluß [l/h]: | 7,1 | 30,1 | | | |

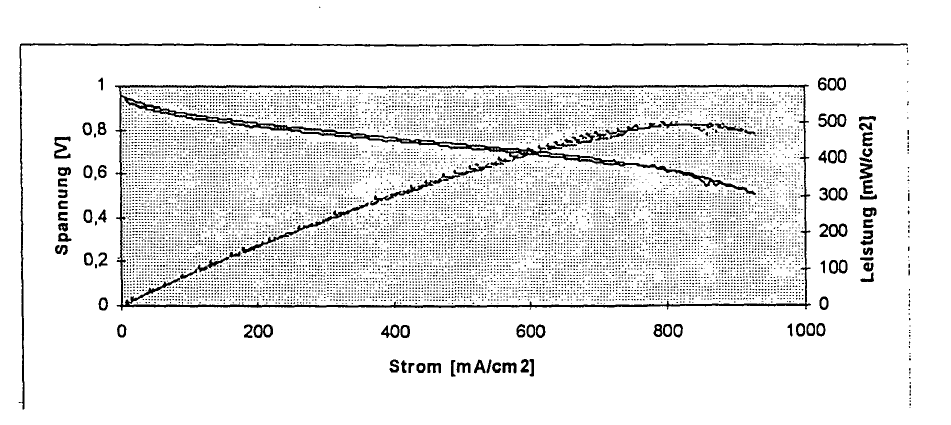

### Beispiel 4: Protonenleitfähigkeit

Werte für die Protonenleitfähigkeit von PEK/PES Blends (PEK mit einem IEC von 2.12 meq (-SO₃H)/g (Polymer). Die Protonenleitfähigkeit wird mit einer 4-Pol Anordnung gemessen. Das verwendete Elektrodenmaterial ist Platin. Die Membran wird während der Messung mit temperierten Wasser überströmt. Dicke und Breite der Membran werden im trocknen Zustand, nach der Behandlung mit 5 %iger Salpetersäure bei 40 °C bestimmt.
Das verwendete Meßgerät ist ein Zahner IM 5d, umgerüstet für die Messung in einer 4-Pol Anordnung.

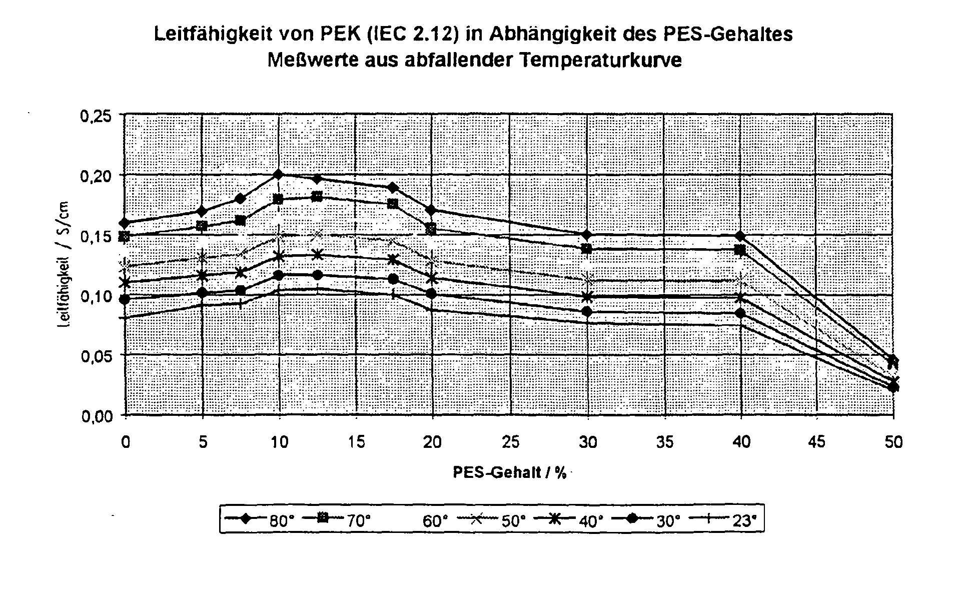

### 2. Leitfähigkeitswerte (abfallende Temperatur) von 80 bis 23 °C gemessen

| | Leitfähigkeit / S/cm | Leitfähigkeit / S/cm | Leitfähigkeit / S/cm | Leitfähigkeit / S/cm | Leitfähigkeit / S/cm | Leitfähigkeit / S/cm | Leitfähigkeit / S/cm |
|---|---|---|---|---|---|---|---|
| PES-Gehalt / % | 80° | 70° | 60° | 50° | 40° | 30° | 23° |
| 0 | 0,1598 | 0,1482 | 0,1365 | 0,1235 | 0,1100 | 0,0961 | 0,0805 |
| 5 | 0,1696 | 0,1571 | 0,1444 | 0,1307 | 0,1161 | 0,1018 | 0,0909 |
| 7,5 | 0,1800 | 0,1618 | 0,1481 | 0,1339 | 0,1188 | 0,1038 | 0,0925 |
| 10 | 0,1998 | 0,1793 | 0,1639 | 0,1482 | 0,1322 | 0,1161 | 0,1036 |
| 12,5 | 0,1963 | 0,1813 | 0,1642 | 0,1499 | 0,1332 | 0,1161 | 0,1050 |
| 17,5 | 0,1890 | 0,1751 | 0,1600 | 0,1452 | 0,1293 | 0,1129 | 0,0998 |
| 20 | 0,1707 | 0,1552 | 0,1422 | 0,1283 | 0,1143 | 0,1008 | 0,0875 |
| 30 | 0,1505 | 0,1388 | 0,1250 | 0,1125 | 0,0986 | 0,0860 | 0,0770 |
| 40 | 0,1492 | 0,1374 | 0,1248 | 0,1117 | 0,0975 | 0,0847 | 0,0744 |
| 50 | 0,0461 | 0,0418 | 0,0366 | 0,0321 | 0,0275 | 0,0234 | 0,0202 |
| 60 | 0,0347 | 0,0314 | 0,0281 | 0,0252 | 0,0217 | 0,0183 | 0,0162 |
| 70 | 0,0178 | 0,0162 | 0,0142 | 0,0129 | 0,0111 | 0,0093 | 0,0083 |

### Beispiel 5: Mechanische Daten

| IEC des PEK | Gehalt an PES [%] | E-Modul, 23 °C, 50 % rel. Feuchte [MPa] | Reißdehnung [%] | E-Modul 60°C, Wasser* [MPa] | Reißdehnung [%] |
|---|---|---|---|---|---|
| | | | | | |
| 2.12 | 0 | 695 | 121 | 7 | 200 |
| 2.12 | 5 | 1140 | 72 | 536 | 284 |
| 2.12 | 7.5 | 725 | 30 | 158 | 288 |
| 2.12 | 10 | 646 | 28 | 195 | 300 |
| 2.12 | 12.5 | 1445 | 111 | 124 | 370 |
| 2.12 | 17.5 | 636 | 26 | 110 | 231 |
| 2.12 | 20 | 1058 | 40 | 100 | 235 |

| | | | | | |
|---|---|---|---|---|---|
| *gemessen in Wasser, E-Modul in Wasser bestimmt als Steigung der Tangente bei 1.2 MPa | | | | | |

### Beispiel 6: Leitfähigkeitsdaten

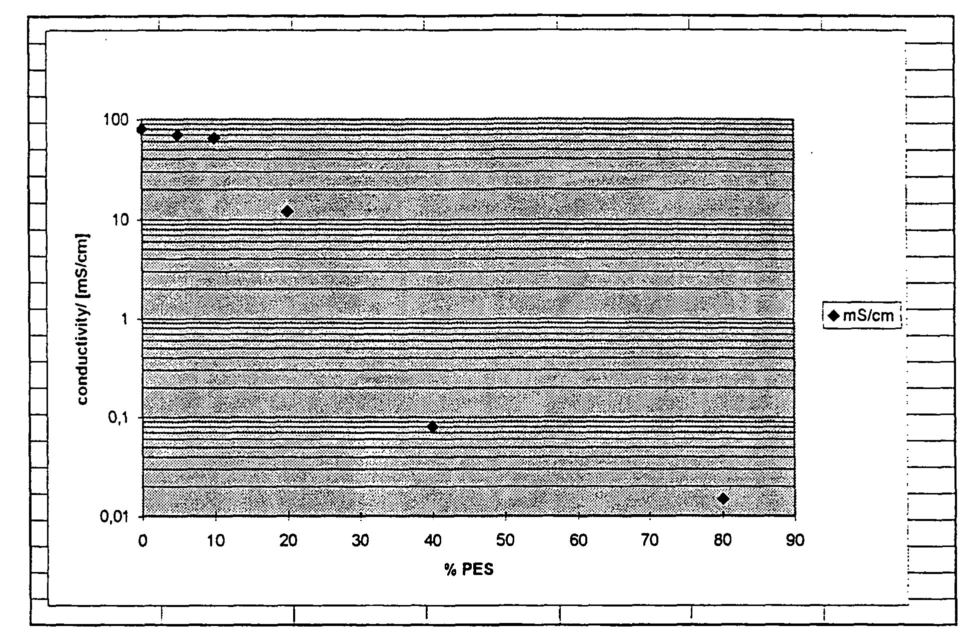

Leitfähigkeitswerte für Blends mit sulfoniertem PEEK (IEC 1.62) und PES Ultrason 7020 P.

### Beispiel 7: Vergleichsdaten, Mechanik

| Polymer | IEC | E-Modul, 23 °C, 50 % rel. Feuchte [MPa] | Reißdehnung [%] | E-Modul 23 °C, naß* [MPa] | Reißdehnung [%] |
|---|---|---|---|---|---|
| | | | | | |
| Victrex PEEK 450 PF | 1.62 | 1725 | 10 | 324 | 90 |
| Hostatec PEEKK | 1.46 | 1590 | 36 | 140 | 52 |

| | | | | | |
|---|---|---|---|---|---|
| *Filme nach 2 Stunden in Wasser naß gemessen | | | | | |

## Patentansprüche

1. Membranen enthaltend
30-99,5 Gew. % eines sulfonierten, streng alternierenden Polyetherketons (A)
mit Wiederholungseinheiten der Formel (I)
-Ar-O-Ar'-CO-, wobei Ar und Ar' unabhängig voneinander zweiwertige aromatische Reste sind,
mit einer Ionenaustauscherkapazität von 1.3 bis 4.0 meq (-SO₃H)/g (Polymer) und
0,5-70 Gew. % eines partiell, nicht oder perfluorierten Polyethersulfons, Polyimids oder eines Derivats dieser Polymere (B).

2. Membran nach Anspruch 1, wobei Ar ein Phenylenrest mit para- und/oder meta-Bindungen ist und
Ar' ein Phenylen-, Naphthylen-, Biphenylen- oder Anthrylenrest ist.

3. Membran nach Anspruch 1, wobei das partiell, nicht oder perfluorierte Polymer (B) ein in organischen Lösungsmitteln lösliches Polymer ist.

4. Membran nach Anspruch 1, wobei das Polymer (B) ein Polyethersulfon der Formel
-Ar-O-Ar'-SO₂- ist, worin Ar und Ar' die in Anspruch 1 definierte Bedeutung besitzen.

5. Membran nach einem der Ansprüche 1 bis 4, wobei das E-Modul im trocknen Zustand bei 23°C, 50% relative Feuchte ≥ 600 MPa ist.

6. Membran nach einem der Ansprüche 1 bis 5, wobei das E-Modul (bestimmt als Steigung der Tangente bei 1.2 MPa) in Wasser bei 60 °C mindestens 90 MPa beträgt und die Reißdehnung ≥ 200 % ist.

7. Verfahren zur Herstellung einer Membran gemäß Anspruch 1 bis 6, durch Auflösen eines sulfonierten Polyetherketons (A) mit Wiederholeinheiten der Formel (I) wie in Anspruch 1 definiert mit einem partiell, nicht oder perfluorierten Polyethersulfon, Polyimid oder einem Derivat dieser Polymere (B) in einem Gewichtsverhältnis im Bereich von 0,01 bis 0,5 (B/A) in einem Lösungsmittel, abfiltrieren, verstreichen der Lösung auf einem flächigen Träger mit anschließendem Trocknen bei einer Temperatur von 25 bis 140 °C.

8. Verwendung der Membran gemäß Anspruch 1 bis 6 für den Einsatz in Brennstoffzellen, insbesondere in Direkt-Methanol-Brennstoffzellen.

9. Verwendung der Membran gemäß Anspruch 1 bis 6 in Hochleistungskondensatoren.

10. Verwendung der Membran gemäß Anspruch 1 bis 6 mit einer Dicke von wenigstens 30 µm für den Einsatz in der Elektrodialyse.

## Claims

1. A membrane comprising
from 30 to 99.5% by weight of a sulfonated, strictly alternating polyether ketone (A) having repeat units of the formula (I)
-Ar-O-Ar'-CO-, where Ar and Ar', independently of one another, are bivalent aromatic radicals,
with an ion-exchange capacity of from 1.3 to 4.0 meq of -SO₃H/g of polymer and
from 0.5 to 70% by weight of a partially fluorinated, nonfluorinated or perfluorinated polyethers sulfone, a polyimides or derivatives of these polymers (B).

2. A membrane as claimed in claim 1, where Ar is a phenylene radical having para bonds and/or meta bonds and
Ar' is a phenylene, naphthylene, biphenylene or anthrylene radical.

3. A membrane as claimed in claim 1, where the partially fluorinated, nonfluorinated or perfluorinated polymer (B) is a polymer soluble in organic solvents.

4. A membrane as claimed in claim 1, where the polymer (B) is a polyether sulfone of the formula
-Ar-O-Ar'-SO₂-, where Ar and Ar' are as defined in claim 1.

5. A membrane as claimed in any one of claims 1 to 5, where the modulus of elasticity in the dry state at 23°C and 50% relative humidity is ≥ 600 MPa.

6. A membrane as claimed in any one of claims 1 to 5, where the modulus of elasticity (determined as gradient of the tangent at 1.2 MPa) in water at 60°C is at least 90 MPa and the ultimate elongation is ≥ 200%.

7. A process for producing a membrane as claimed in claims 1 to 6, by dissolving a sulfonated polyether ketone (A) having repeat units of the formula (I), as defined in claim 1, and a partially fluorinated, nonfluorinated or perfluorinated polyether sulfone, a polyimide or a derivative of these polymers (B) in a weight ratio in the range from 0.01 to 0.5 (B/A) in a solvent, filtering off, spreading the solution on a sheet-like support and then drying at a temperature of from 25 to 140°C.

8. The use of the membrane as claimed in claims 1 to 6 in fuel cells, in particular in direct methanol fuel cells.

9. The use of the membrane as claimed in claims 1 to 6 in high-performance capacitors.

10. The use of the membrane as claimed in claims 1 to 6 and having a thickness of at least 30 µm, in electrodialysis.

## Revendications

1. Des membranes consistant en 30 - 99,5 % en poids d'une polyéthercétone sulfonée, rigoureusement alternée (A) avec des unités de répétition de la formule (I) -Ar-O-Ar'-CO-, où Ar et Ar' sont deux restes aromatiques, bivalents, indépendantes l'un de l'autre, avec une capacité d'échangeur d'ions de 1,3 jusqu'à 4,0 milliéquivalents (-SO₃H)/g (polymère) et 0,5 - 70 % en poids d'une polyéthersulfone totalement, partiellement ou pas du tout perfluorurée, une polyimide ou un dérivé de ces polymères.

2. Membrane selon la revendication 1, où Ar est un reste de phénylène avec des liaisons para- et/où meta- et Ar' est un reste de phénylène-, naphtylène-, diphénilène- ou anthrylène.

3. Membrane selon la revendication 1, où le polymère totalement, partiellement ou pas du tout perfluoruré (B) est un polymère soluble dans des solvants organiques.

4. Membrane selon la revendication 1, où le polymèrere (B) est une polyéthersulfone de la formule -Ar-O-Ar'-SO₂- où Ar et Ar' ont la signification définie dans la revendication 1.

5. Membrane selon l'une quelconque des revendications 1 jusqu'à 4, où le module d'élasticité à l'état seché à 23° C, 50 % humidité relative est ≥ 600 MPa.

6. Membrane selon l'une quelconque des revendications 1 jusqu'à 5, où le module d'élasticité (déterminé comme accroissement de la tangente à 1,2 MPa) a une valeur dans l'eau à 60° C de minimum 90 MPa, et l'élongation de rupture est ≥ 200 %.

7. Procédé pour produire une membrane selon les revendications 1 jusqu'à 5, par la dissolution dans un solvant d'une polyéthercétone sulfonée (A) avec des unités de répétition de la formule (I) comme définit dans la revendication 1, avec une polyéthersulfone totalement, partiellement ou pas du tout perfluorurée, une polyimide, ou un dérivé de ces polymères (B) dans une proportion pondérale qui se trouve dans l'intervalle à partir de 0,01 jusqu'à 0,5 (B/A), la filtration, l'application de la solution sur une surface portante plane à fin de se sécher ensuite à une température de 25 jusqu'à 140° C.

8. L'utilisation de la membrane selon les revendications 1 jusqu'à 6 pour son application dans des piles à combustion, particulièrement dans des piles à combustion directe du méthanol.

9. L'utilisation de la membrane selon les revendications 1 jusqu'à 6 dans des condensateurs de grande performance.

10. L'utilisation de la membrane selon les revendications 1 jusqu'à 6 avec une épaisseur de minimum 30 µm pour son application dans l'électrodialyse.
